# EUROPÄISCHE PATENTANMELDUNG

(11) **EP 2 575 295 A1**
(43) Veröffentlichungstag der Anmeldung: **03.04.2013**
(21) Anmeldenummer: 11182956.0
(22) Anmeldetag: 27.09.2011
(51) Int. Cl.: H04L 12/40, H04L 12/403, H04W 16/14

(54) **Verfahren zum Betrieb eines Automatisierungsgeräts zum Vermeiden von Datenverlusten und entsprechendes Datenübertragungsverfahren**

(71) Anmelder: Siemens Aktiengesellschaft, 80333 München (DE)
(72) Erfinder: Jänicke, Peter, 91058 Erlangen (DE); Seebahn, Björn, 91054 Erlangen (DE); Walders, Hanno, 91056 Erlangen (DE)

(57) **Zusammenfassung**

Die Erfindung betrifft ein Verfahren zum Betrieb eines Automatisierungsgeräts (12-16, 18), das an zumindest ein anderes Automatisierungsgerät (12-16, 18) über eine kommunikative Verbindung (20) Daten in Form von zu Datenpaketen zusammengefassten Datenblöcken (22) übermittelt, wobei eine Mehrzahl von Datenblöcken (22) nacheinander in einem Kommunikationszyklus (24) übertragen werden, wobei sich das Verfahren dadurch auszeichnet, dass eine zufällige Positionierung eines Datenblocks (22) im Kommunikationszyklus (24) erfolgt.

## Beschreibung

Die Erfindung betrifft ein Verfahren zum Betrieb eines Automatisierungsgeräts, insbesondere ein Verfahren zum Betrieb eines Antriebssystems als ein Beispiel für ein Automatisierungsgerät, zum Vermeiden von Datenverlusten bei einer Datenübertragung von dem Automatisierungsgerät zu einem anderen Automatisierungsgerät oder zu einem sonstigen Empfänger und damit also auch ein Verfahren zur Übertragung von Daten und zur Vermeidung oder Verringerung von Datenverlusten.

Der Begriff Automatisierungsgerät umfasst sämtliche Geräte, Einrichtungen oder Systeme, also neben z.B. Steuerungen, wie speicherprogrammierbaren Steuerungen, Prozessrechnern, (Industrie-)Computern, dezentralen Peripheriegeräten, Bedien-und Beobachtungsgeräten und dergleichen auch Antriebs- oder sonstige Aggregatsteuerungen, Frequenzumrichter und Ähnliches, wie sie zur Steuerung, Regelung, Überwachung und/oder Beeinflussung technologischer Prozesse z.B. zum Umformen oder Transportieren von Material, Energie oder Information etc. eingesetzt werden oder einsetzbar sind, wobei insbesondere über geeignete technische Einrichtungen, wie z.B. Sensoren oder Aktoren, Energie aufgewandt oder gewandelt wird.

Derartige Automatisierungsgeräte sind an sich bekannt. Die Anmelderin der vorliegenden Erfindung entwickelt und vertreibt z.B. unter der Marke SIMATIC Automatisierungsgeräte in Form von speicherprogrammierbaren Steuerungen, dezentralen Peripheriegeräten, Bedien- und Beobachtungsgeräten usw. sowie untern den Marken SINUMERIK und SINAMICS Antriebs- oder sonstige Aggregatsteuerungen, Frequenzumrichter und Ähnliches. Bei derartigen Automatisierungsgeräten ist zum Transfer von Daten von oder zum jeweiligen Automatisierungsgerät eine kommunikative Verbindung des jeweiligen Automatisierungsgeräts mit zumindest einem anderen Automatisierungsgerät, also z.B. einer übergeordneten Steuerung oder dergleichen, bekannt. Weiterhin ist bekannt, dass im Rahmen einer solchen kommunikativen Verbindung das jeweilige Automatisierungsgerät Daten an das zumindest eine andere Automatisierungsgerät in Form von Datenpaketen mit einzelnen Datenblöcken (frames), die mitunter auch als Telegramme bezeichnet werden, übermittelt und dass eine Mehrzahl von Datenblöcken oder frames nacheinander in einem Kommunikationszyklus übertragen werden.

Ein solcher Kommunikationszyklus führt zu einem festen Zeitraster oder einem festen Zeitfenster, in dem jeweils eine Mehrzahl von Datenblöcken übertragen wird. Indem die Dauer eines Kommunikationszyklus, also die Dauer des jeweiligen Zeitfensters, durch einen festen, vorgegebenen oder vorgebbaren Zeitwert bestimmt ist, ergibt sich eine vorhersehbare Zyklizität der in den Datenblöcken/frames jeweils übermittelten Daten, so dass bei einer ausreichend kurzen Dauer des Kommunikationszyklus/Zeitfensters eine Echtzeitbe- und - verarbeitung der in den einzelnen Datenblöcken übermittelten Daten möglich ist.

Eine solche Echtzeitbehandlung der Daten ist speziell für Antriebssysteme als Beispiel für ein Automatisierungsgerät relevant, weil das oder jedes von einem Antriebssystem angesteuerte Aggregat, also z.B. ein Elektromotor, normalerweise in einer Maschine, z.B. einer Werkzeugmaschine, mit anderen Aggregaten koordiniert werden muss.

Allerdings ist auch bekannt, dass Schalthandlungen in einem solchen Antriebssystem starke elektromagnetische Störungen erzeugen können. Solche Schalthandlungen können auch synchron mit dem Zeitraster der Datenübertragung auftreten, z.B. wenn aufgrund eines in einem Datenblock/frame übertragenen Datums eine Aktivierung eines Aggregats erfolgt und die Aktivierung des Aggregats zu elektromagnetischen Störungen führt. Wenn solche Schalthandlungen oder Ähnliches zu einer Störung der Datenübertragung führen, werden Daten oder Datenblöcke innerhalb eines Kommunikationszyklus gestört. Wenn die Störung periodisch, insbesondere mit derselben oder im Wesentlichen derselben Periode des Kommunikationszyklus auftritt, kommt es immer wieder zu einer Störung an derselben Position innerhalb aufeinander folgender Zeitfenster der zyklischen Kommunikation, so dass dies dazu führen kann, dass bei zyklisch, also in jedem Kommunikationszyklus oder in sonstiger Weise regelmäßig übermittelten Datenblöcken, die innerhalb eines Kommunikationszyklus oft eine feste Position haben, immer wieder derselbe Datenblock gestört wird. Die Folge ist eine Anfälligkeit der jeweiligen Anlage mit einem solchen Automatisierungsgerät, insbesondere einem solchen Antriebssystem, gegen elektromagnetische Störungen, die zum Anlagenstillstand führen kann.

Eine Aufgabe der vorliegenden Erfindung besteht entsprechend darin, ein Verfahren zum Betrieb eines Automatisierungsgeräts, insbesondere eines Antriebssystems als Automatisierungsgerät, anzugeben, mit dem die oben genannten Nachteile vermieden werden.

Diese Aufgabe wird erfindungsgemäß mit den Merkmalen des in Anspruch 1 definierten Verfahrens gelöst. Dazu ist bei einem Verfahren zur Datenübertragung oder einem darauf basierenden Verfahren zum Betrieb eines mit zumindest einem anderen Automatisierungsgerät kommunikativ verbundenen Automatisierungsgeräts, wobei das Automatisierungsgerät zumindest an das andere Automatisierungsgerät über die kommunikative Verbindung Daten in Form von zu Datenpaketen zusammengefassten Datenblöcken (frames) übermittelt und wobei eine Mehrzahl von Datenblöcken nacheinander in einem Kommunikationszyklus übertragen werden, vorgesehen, dass eine zufällige oder in sonst geeigneter Weise wechselnde Positionierung eines Datenblocks im Datenpaket oder im Kommunikationszyklus erfolgt.

Der Vorteil der Erfindung besteht darin, dass mit der wechselnden Positionierung eines Datenblocks oder aller Datenblöcke vermieden wird, dass bei periodisch auftretenden Störungen in aufeinander folgenden Kommunikationszyklen immer der gleiche Datenblock gestört oder zerstört wird, was zu einem Datenausfall auf Empfängerseite führen würde, wohingegen bei einer von Zyklus zu Zyklus wechselnden Anordnung der Datenblöcke eine Störung oder Zerstörung einzelner Datenblöcke toleriert werden kann. Dies weil davon ausgegangen werden kann, dass ein in einem ersten Kommunikationszyklus gestörter Datenblock in einem nächsten Kommunikationszyklus von der periodisch auftretenden Störung nicht betroffen ist und dann fehlerfrei übertragen wird.

Der hier vorgeschlagene Ansatz kann selbstverständlich auch in Szenarien verwendet werden, bei denen während eines Kommunikationszyklus nur ein einzelner Datenblock übertragen wird. Das Datenpaket kann dann neben dem einen Datenblock eine Anzahl leerer Datenblöcke umfassen. Damit ist auch die Position einen solchen einzelnen Datenblocks im aus der Summe aller Datenblöcke gebildeten Datenpaket zufällig oder in sonst geeigneter Weise variierbar, so dass sich auch die Position eines einzelnen Datenblocks von Zyklus zu Zyklus ändert.

Das Verfahren kommt besonders zum Betrieb einer Werkzeugmaschine mit von der Werkzeugmaschine umfassten und kommunikativ verbundenen Automatisierungsgeräten, also Steuerungs- und Regelungseinheiten für einzelne Aggregate der Werkzeugmaschine, nämlich z.B. Achssteuersysteme oder dergleichen, in Betracht, wobei zumindest ein derartiges Automatisierungsgerät an zumindest ein anderes Automatisierungsgerät über die kommunikative Verbindung Daten in Form von zu Datenpaketen zusammengefassten Datenblöcken übermittelt und wobei eine Mehrzahl von Datenblöcken nacheinander in einem Kommunikationszyklus übertragen werden, wobei eine zufällige oder in sonst geeigneter Weise wechselnde Positionierung eines Datenblocks oder aller Datenblöcke im Datenpaket oder im Kommunikationszyklus erfolgt.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bevorzugt ist vorgesehen, dass bei einem Verfahren zum Betrieb einer Werkzeugmaschine die Datenblöcke für eine periodische Übertragung von Reglerdaten vorgesehen sind. Indem die Datenblöcke mit solchen Reglerdaten im Kommunikationszyklus oder im jeweiligen Datenpaket zufällig oder zumindest von Kommunikationszyklus zu Kommunikationszyklus an anderen Positionen angeordnet sind, ist gewährleistet, dass selbst bei periodischen Störungen immer nur einzelne und bei aufeinander folgenden Kommunikationszyklen normalerweise nicht die selben Datenblöcke von solchen Störungen betroffen sind, so dass auf Empfängerseite, also einem die Reglerdaten verarbeitenden Aggregat, im Mittel zumindest in jedem zweiten Kommunikationszyklus verarbeitbare Daten vorliegen.

Wenn die zufällige Positionierung der Datenblöcke in dem Datenpaket oder in dem Kommunikationszyklus aufgrund einer automatisch erzeugten Folge von Pseudozufallszahlen erfolgt, besteht auf dieser Basis eine einfache Möglichkeit für eine ausreichende zufällige Positionierung der Datenblöcke. Die Folge von Pseudozufallszahlen legt die Position aller zu übertragenden Datenblöcke fest. Dabei muss die Zufallsfolge nicht notwendig die tatsächliche Position des jeweiligen Datenblocks im Datenpaket angeben. Zum Beispiel kann auch bei einer automatisch erzeugten Pseudozufallsfolge mit Zahlenwerten wie etwa "17, 3, 5, 98" eine Kodierung der Zufallsfolge z.B. nach einem Kriterium wie "kleinste Zahl", "nächstgrößere Zahl", usw. erfolgen, so dass die soeben exemplarisch angegebene Zufallsfolge umgesetzt wird in die Folge "3, 1, 2, 4", so dass der erste zu übertragende Datenblock im Datenpaket die dritte Position erhält, der zweite zu übertragende Datenblock die erste Position, usw.

Das Verfahren wie hier und nachfolgend beschrieben kommt speziell für serielle Verbindungen als kommunikative Verbindung, bei denen die Datenblöcke nach einem seriellen Datenübertragungsprotokoll übermittelt werden, in Betracht.

Die oben genannte Aufgabe wird auch mit einem Automatisierungsgerät der eingangs genannten Art, insbesondere einem Antriebssystem oder einem Automatisierungsgerät in einem Antriebssystem, gelöst, das nach dem Verfahren wie hier und im Folgenden beschrieben arbeitet und dazu Mittel zur Durchführung des Verfahrens umfasst. Die Erfindung ist dabei bevorzugt in Software implementiert. Die Erfindung ist damit einerseits auch ein Computerprogramm mit durch einen Computer ausführbaren Programmcodeanweisungen und andererseits ein Speichermedium mit einem derartigen Computerprogramm sowie schließlich auch eine Steuerungseinrichtung in einem Antriebssystem, in dessen Speicher als Mittel zur Durchführung des Verfahrens und seiner Ausgestaltungen ein solches Computerprogramm geladen oder ladbar ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: eine schematisch vereinfachte Darstellung eines Automatisierungssystems mit einer Mehrzahl kommunikativ verbundener Automatisierungsgeräte,
- FIG 2: eine Illustration eines zeitlichen Ablaufs einer Datenübertragung in Form von zu Datenpaketen zusammengefassten Datenblöcken und einen Einfluss einer zyklischen Störung auf eine solche Datenübertragung,
- FIG 3: eine zufällige/wechselnde Anordnung von Datenblöcken in einem in jeweils einem Kommunikationszyklus übertragenen Datenpaket.

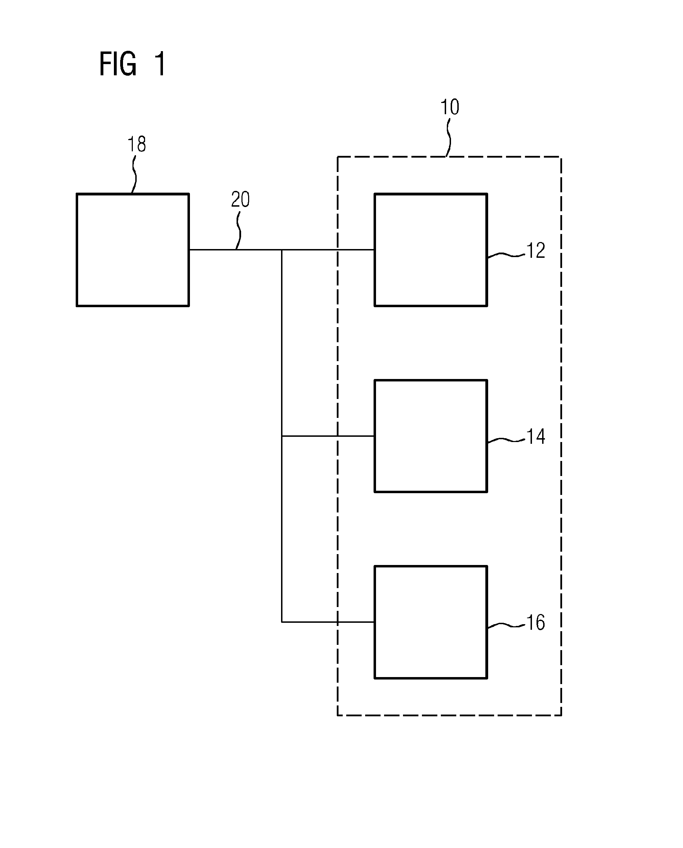

FIG 1 zeigt schematisch vereinfacht eine Maschine 10, z.B. eine Werkzeugmaschine, und davon umfasste Antriebssysteme 12, 14, 16. Die Antriebssysteme 12, 14, 16 sind untereinander und mit einer übergeordneten Steuerung 18 kommunikativ verbunden. Die übergeordnete Steuerung 18 kann auch von der Maschine 10 umfasst sein. Als kommunikative Verbindung 20 kommt eine serielle Verbindung in Betracht, über die die Einheiten, also die Antriebssysteme 12, 14, 16 und die übergeordnete Steuerung 18, Daten, zum Beispiel Steuerbefehle, Sollwerte, Messwerte, usw., austauschen können. Die oben genannten Einheiten werden im Folgenden allgemein auch als Automatisierungsgeräte 12-16, 18 bezeichnet und sind hier stellvertretend für grundsätzlich beliebige Automatisierungsgeräte 12-16, 18 exemplarisch herangezogen.

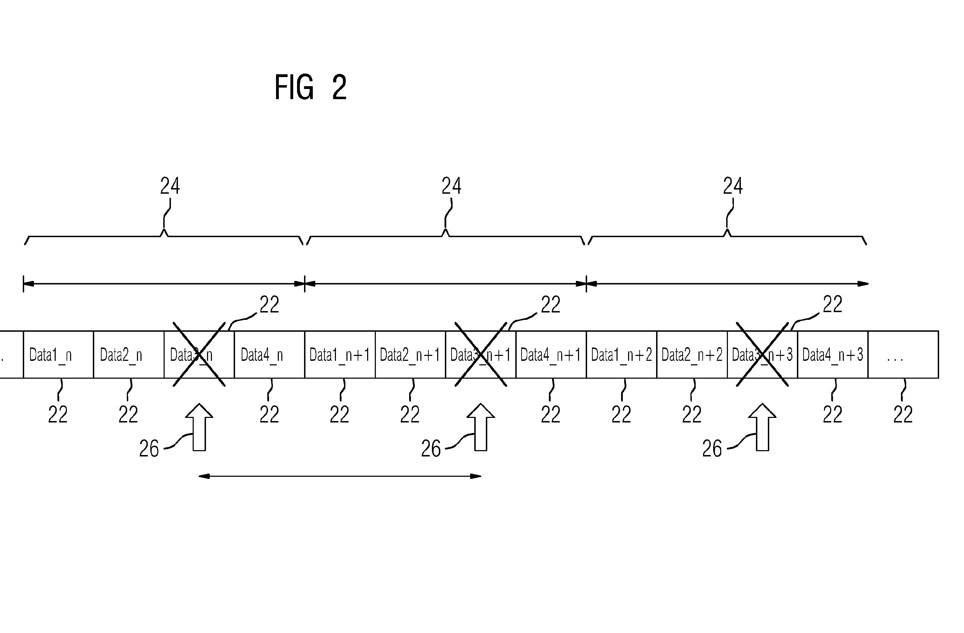

Wenn die kommunikative Verbindung eine serielle Verbindung ist, und davon soll im Folgenden ausgegangen werden, werden über die kommunikative Verbindung zu Datenpaketen zusammengefasste Datenblöcke 22 (FIG 2) nach einem seriellen Datenübertragungsprotokoll zwischen den einzelnen Automatisierungsgeräten 12-16, 18 übermittelt.

FIG 2 zeigt ein Beispiel für über eine kommunikative Verbindung 20 (FIG 1) übermittelte Datenblöcke 22, die in der Fachterminologie auch als frames bezeichnet werden. Erkennbar ist, dass die Datenblöcke 22 zu Datenpaketen zusammengefasst sind und in einem festen Zeitraster übermittelt werden. Die Dauer eines solchen Zeitrasters wird hier und im Folgenden als Kommunikationszyklus 24 bezeichnet. Unmittelbar an einen Kommunikationszyklus 24 schließt sich ein nächster Kommunikationszyklus 24 an und dies wiederholt sich, solange die Datenübertragung zwischen den Automatisierungsgeräten 12-16, 18 erfolgt. Anhand der symbolischen Bezeichnung der einzelnen Datenblöcke 22 mit "Datal", "Data2", usw. ist erkennbar, dass, wie dies in einem Echtzeitsystem üblich ist, in aufeinander folgenden Kommunikationszyklen 24 fortwährend gleiche Daten, also zum Beispiel Messwerte eines Sensors oder Sollwerte für einen Aktor - zum Beispiel Reglerdaten -, übertragen werden. Verschiedene Datenblöcke 22 haben dabei meist auch eine feste Position innerhalb des Datenpakets und des von einem Kommunikationszyklus 24 umfassten Zeitfensters, der in jedem Kommunikationszyklus 24 in FIG 2 durch jeweils einen horizontalen Doppelpfeil dargestellt ist.

Über diese an sich bekannte Situation hinaus ist in FIG 2 dargestellt, dass Störungen 26 (symbolisch durch einen Blockpfeil dargestellt), also z.B. elektromagnetische Störungen, zu einer Verfälschung oder Zerstörung übertragener Datenblöcke 22 führen können. Dies ist in der Darstellung in FIG 2 dadurch angedeutet, dass einzelne Datenblöcke 22 durchgestrichen sind. Zu solchen Störungen 26 kann es kommen, wenn Schalthandlungen in einer Maschine 10 (FIG 1) starke elektromagnetische Felder und damit elektromagnetische Störungen erzeugen und sich diese auf die Datenübertragung auswirken. Weil solche Schalthandlungen üblicherweise mit den in den Datenblöcken 22 übertragenen Daten korreliert sind, z.B. wenn die Daten Ansteuerbefehle oder geänderte Sollwerte für Aktoren der Maschine 10 umfassen, können entsprechend auch die Störungen 26 synchron mit dem Zeitraster der Datenübertragung auftreten. Dann kann es dazu kommen, dass stets der gleiche Datenblock 22, hier der Datenblock 22 mit den symbolisch als "Data3" bezeichneten Daten, betroffen ist und dass eine solche zyklische Störung zu einem vollständigen Ausfall der jeweiligen Daten auf Empfängerseite führt. Die Folge ist eine Anfälligkeit der jeweiligen Anlage, also z.B. der Maschine 10, für elektromagnetische Störungen, die auch zum Anlagenstillstand führen kann.

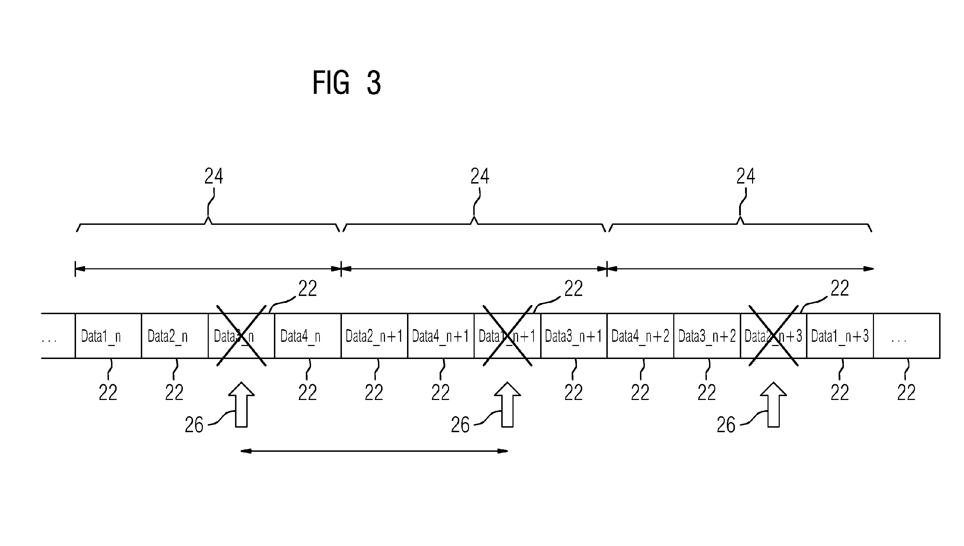

FIG 3 zeigt, dass zur Vermeidung solcher Verluste von Datenblöcken 22 eine zufällige oder zumindest von Kommunikationszyklus 24 zu Kommunikationszyklus 24 wechselnde Positionierung eines Datenblocks 22 im Datenpaket oder im Kommunikationszyklus 24 erfolgt. Damit sind einzelne Telegrammausfälle, in der dargestellten Situation also der Ausfall der symbolisch als "Data3" dargestellten Daten im ersten Kommunikationszyklus, sodann der Verlust der symbolisch mit "Data1" bezeichneten Daten im darauf folgenden Kommunikationszyklus 24 und schließlich der Verlust der symbolisch mit "Data2" bezeichneten Daten im letzten dargestellten Kommunikationszyklus 24 tolerierbar. Die Folge ist eine höhere Robustheit der Datenübertragung gegen elektromagnetische Störungen oder sonstige Einflüsse, die eine Übertragung der Datenpakete und der davon umfassten Datenblöcke 22 negativ beeinflussen.

Das Verfahren kommt besonders bei einer periodischen Übertragung von Reglerdaten für eine Maschine 10, nämlich z.B. eine Werkzeugmaschine, in Betracht, wenn innerhalb eines Reglertaktes und eines darauf abgestimmten Kommunikationszyklus 24 die einzelnen Motorreglerdaten für die von der Werkzeugmaschine umfassten Achssteuereinheiten 12, 14, 16 nacheinander gesendet werden. Durch eine periodische Störung 26, z.B. verursacht durch Schaltvorgänge in einem Umrichter einer solchen Werkzeugmaschine, kann an einer bestimmten Stelle im Datenpaket immer wieder der gleiche Datenblock 22 für eine bestimmte Achse der Werkzeugmaschine gestört werden. Diese Informationen würden bei einem periodischen Störsignal immer wieder die Daten für die selbe Achse stören und die Motorreglung wäre dauerhaft beeinträchtigt. Dieses Problem wird dadurch umgangen, dass die Positionen der einzelnen Datenblöcke/frames 22 in jedem Kommunikationszyklus 24 zufällig oder in sonst geeigneter Weise festgelegt werden, so dass damit in aufeinander folgenden Kommunikationszyklen 24 die jeweils gesendeten Datenblöcke 22 zeitlich verschoben übertragen werden. So kann bei einer Toleranz von einem fehlerhaften Datenblock 22 das oder jedes davon umfasste Nutzdatum im nächsten Kommunikationszyklus 24 gesendet werden, ohne eine Störung der Reglung hervorzurufen.

Eine Möglichkeit um eine solche zufällige oder wechselnde Positionierung einzelner oder aller Datenblöcke/frames 22 in einem Kommunikationszyklus 24 zu erreichen, besteht zum Beispiel darin, dass bei einer bekannten Anzahl von Datenblöcken 22 pro Kommunikationszyklus 24 für jeden Datenblock 22 für eine Folge von Kommunikationszyklen 24 deren Position festgelegt wird. Bei zum Beispiel vier Datenblöcken 22 kann vorgesehen sein, dass ein erster Datenblock 22 im ersten Kommunikationszyklus zuerst, also an erster Stelle, im zweiten Kommunikationszyklus 24 an zweiter Stelle und im dritten Kommunikationszyklus 24 an dritter Stelle, usw. übertragen wird. Für einen zweiten Datenblock 22 würden sich dann in vier aufeinander folgenden Kommunikationszyklen 24 jeweils die Positionen zwei, drei, vier und eins ergeben. Für einen dritten und vierten Datenblock 22 ergeben sich entsprechend die Positionen drei, vier, eins und zwei bzw. vier, eins, zwei und drei. Nach Ablauf dieser vier Kommunikationszyklen 24 kann in einem nächsten Kommunikationszyklus 24 wieder mit der Positionierung aus dem oben beschriebenen ersten Kommunikationszyklus begonnen werden oder es kann für jeweils vier Kommunikationszyklen 24 mehr als ein Positionierungsschema hinterlegt sein, das dann zyklisch oder ggf. auch (pseudo-)zufällig angewandt wird. Dieses Beispiel lässt sich ohne Weiteres für Situationen mit mehr oder weniger als vier Datenblöcken 22 anpassen.

Die oben exemplarisch verwendeten Zahlenwerte lassen sich auch als Matrix schreiben, in der zum Beispiel die erste, zweite, dritte und vierte Zeile die Positionen des ersten, zweiten, dritten und vierten Datenblocks 22 in vier aufeinander folgenden Kommunikationszyklen angegeben.

| | | | |
|---|---|---|---|
| 1 | 2 | 3 | 4 |
| 2 | 3 | 4 | 1 |
| 3 | 4 | 1 | 2 |
| 4 | 1 | 2 | 3 |

Die Werte in der ersten Zeile oder auch die Werte in der ersten Spalte können sich auch aufgrund von Pseudozufallszahlen oder aufgrund einer hinterlegten oder hinterlegbaren Zahlenfolge ergeben. Wenn kein festes Positionierungsschema zur wechselnden Anordnung der Datenblöcke 22 vorgegeben ist, kommt eine zufällig Anordnung aller Datenblöcke 22 auf Basis von Zufallszahlen oder dergleichen in Betracht. Dabei wird zunächst die Position eines ersten Datenblocks 22 festgelegt. Diese Position kann von weiteren Datenblöcken 22 im gleichem Kommunikationszyklus 24 nicht mehr belegt werden, so dass die zufällig Positionierung weiterer Datenblöcke 22 eine Anordnung um die bereits belegten Positionen herum bewirkt. In diesem Sinne meint der Begriff "zufällig" eine wie auch immer erreichte wechselnde Anordnung von Datenblöcken 22 von einem Kommunikationszyklus 24 zum nächstfolgenden Kommunikationszyklus 24, auch wenn diese zufällige Anordnung auf einen deterministischen und ggf. sogar regelmäßigem Schema basiert.

Die Umsetzung von zu übertragenden Nutzdaten in Datenblöcke/frames 22 und deren Zusammenfassung zu Datenpaketen erfolgt heutzutage in hochintegrierten Bausteinen. Der Ansatz gemäß der Erfindung und sämtliche Ausgestaltungen, also die abwechselnde, zufällige oder pseudo-zufällige Anordnung der Datenblöcke/frames 22, kann vollständig in solche Bausteine integriert werden. Externe Bauteile sind nicht erforderlich. Für die Umsetzung des hier beschriebenen Verfahrens fallen daher keine nennenswerten Kosten an. Der sogenannte Mikrocode für einen solchen hochintegrierten Baustein, also z.B. einen ASIC oder dergleichen, ist ein Beispiel für ein Computerprogramm mit Programmcodemitteln, um alle Schritte des Verfahrens und seiner Ausgestaltungen wie hier beschrieben auszuführen. Ein nach dem Verfahren arbeitendes Automatisierungsgerät 12, 14, 16, in dem das hier beschriebene Verfahren oder eines seiner Ausgestaltungen implementiert ist, weist in an sich bekannter Art eine Verarbeitungseinheit in Form von oder nach Art eines Mikroprozessors und einen Speicher auf, in den ein Computerprogramm zur Ausführung des Verfahrens und etwaiger Ausführungen geladen ist oder einen hochintegrierten Baustein, also z.B. einen Schnittstellenbaustein, der für den Zugriff auf die kommunikative Verbindung 22 gleichzeitig als Verarbeitungseinheit und aufgrund des integrierten Mikrocodes auch als Speicher für ein in Form des Mikrocodes umgesetztes Computerprogramm fungiert.

Einzelne im Vordergrund stehende Aspekte der hier eingereichten Beschreibung lassen sich damit kurz wie folgt zusammenfassen: Angegeben wird ein Verfahren zum Betrieb eines Automatisierungsgeräts 12-16, 18, das an zumindest ein anderes Automatisierungsgerät 12-16, 18 über eine kommunikative Verbindung 20 Daten in Form von zu Datenpaketen zusammengefassten Datenblöcken 22 übermittelt, wobei eine Mehrzahl von Datenblöcken 22 nacheinander in einem Kommunikationszyklus 24 übertragen werden, wobei sich das Verfahren dadurch auszeichnet, dass eine zufällige Positionierung eines Datenblocks 22 im Kommunikationszyklus 24 erfolgt sowie ein entsprechendes Kommunikationsverfahren.

## Patentansprüche

1. Verfahren zum Betrieb eines mit zumindest einem anderen Automatisierungsgerät (12-16, 18) kommunikativ verbundenen Automatisierungsgeräts (12-16, 18), wobei das Automatisierungsgerät (12-16, 18) zumindest an das andere Automatisierungsgerät (12-16, 18) über die kommunikative Verbindung (20) Daten in Form von zu Datenpaketen zusammengefassten Datenblöcken (22) übermittelt und wobei eine Mehrzahl von Datenblöcken (22) nacheinander in einem Kommunikationszyklus (24) übertragen werden,
**dadurch gekennzeichnet, dass** eine zufällige oder wechselnde Positionierung eines Datenblocks (22) im Kommunikationszyklus (24) erfolgt.

2. Verfahren zum Betrieb einer Werkzeugmaschine (10) mit von der Werkzeugmaschine (10) umfassten und kommunikativ verbundenen Automatisierungsgeräten (12-16, 18), wobei zumindest ein Automatisierungsgerät (12-16, 18) an zumindest ein anderes Automatisierungsgerät (12-16, 18) über die kommunikative Verbindung Daten in Form von zu Datenpaketen zusammengefassten Datenblöcken (22) übermittelt und wobei eine Mehrzahl von Datenblöcken (22) nacheinander in einem Kommunikationszyklus (24) übertragen werden,
**dadurch gekennzeichnet, dass** eine zufällige oder wechselnde Positionierung eines Datenblocks (22) im Kommunikationszyklus (24) erfolgt.

3. Verfahren nach Anspruch 2, wobei die Datenblöcke (22) für eine periodische Übertragung von Reglerdaten vorgesehen sind.

4. Verfahren nach Anspruch 1, 2 oder 3, wobei die zufällige Positionierung der Datenblöcke (22) aufgrund einer automatisch erzeugten Folge von Pseudozufallszahlen erfolgt.

5. Verfahren nach einem der vorangehenden Ansprüche, wobei die kommunikative Verbindung eine serielle Verbindung ist und wobei die Datenblöcke (22) nach einem seriellen Datenübertragungsprotokoll übermittelt werden.

6. Computerprogramm mit Programmcodemitteln, um alle Schritte von jedem beliebigen der Ansprüche 1 bis 5 durchzuführen, wenn das Programm auf einem Automatisierungsgerät (12-16, 18) zur Steuerung, Überwachung und/oder Beeinflussung eines technischen Prozesses ausgeführt wird.

7. Antriebssystem (12-16) mit einer Verarbeitungseinheit und einem Speicher, in den ein Computerprogramm nach Anspruch 6 geladen ist, das im Betrieb des Gerätes durch die Verarbeitungseinheit ausgeführt wird.
